# EUROPÄISCHE PATENTSCHRIFT

(11) **EP 2 391 586 B1**
(45) Veröffentlichungstag und Bekanntmachung des Hinweises auf die Patenterteilung: **07.01.2015**
(21) Anmeldenummer: 10702040.6
(22) Anmeldetag: 22.01.2010
(51) Int. Cl.: C03B 5/04, C03B 5/225, C03B 5/23

(54) **SCHMELZEINRICHTUNG FÜR DIE ERZEUGUNG EINER GLASSCHMELZE**
MELTING DEVICE FOR PRODUCING A GLASS MELT
DISPOSITIF DE FUSION POUR LA PRODUCTION D'UN BAIN DE VERRE

(30) Priorität: 31.01.2009 DE 102009006958
(43) Veröffentlichungstag der Anmeldung: 07.12.2011
(73) Patentinhaber: Beteiligungen Sorg GmbH & Co. KG, 97816 Lohr am Main (DE)
(72) Erfinder: LINDIG, Matthias, 55218 Ingelheim (DE); SORG, Helmut, 63864 Glattbach (DE); SORG, Alexander, 63739 Aschaffenburg (DE)
(74) Vertreter: Keil & Schaafhausen Patent- und Rechtsanwälte
(86) Internationale Anmeldenummer: PCT/EP2010/000364
(87) Internationale Veröffentlichungsnummer: WO 2010/086121

(56) Entgegenhaltungen:
- DE-C2- 2 603 561
- US-A- 3 261 677

## Beschreibung

Die Erfindung betrifft eine Schmelzeinrichtung für die Erzeugung einer Glasschmelze mit einer Reihenanordnung aus mindestens einer Beschickungsöffnung für Glasrohstoffe, einem Schmelzbereich, einem Läuterbereich, einer Einschnürung, einem Konditionierbereich und aus einem Überlauf für die überleitung der Glasschmelze zu einer Verarbeitungseinrichtung, wobei die Reihenanordnung jeweils Bodenflächen, Seitenwände und Deckenflächen aufweist.

Die Technologie der Glasherstellung ist sehr komplexer Natur. Sie unterliegt Grundsätzen der Physik, der Chemie, der Thermodynamik, der Thermokinetik, der Statik und der Geometrie der Schmelzenbehälter und-nicht zuletzt - gesetzlichen Verordnungen über den Schutz der Menschen und der Umwelt gegen Schadstoffe, der Energieeinsparung und der Preis-gestaltung. Die Herstellverfahren beruhen in der Regel auf einer Überschreitung einer Temperatur von 1.500 °C, und das entspricht der Weiss-glut. Wichtig ist dabei, dass die Komponenten und Parameter in komple-xen Wechselwirkungen zu einander zu bewerten sind und oft auch kontrovers aufeinander einwirken.

Dies ist auch zu beachten aus der Sicht der Hersteller von Glasprodukten wie Haushaltsglas und Behälterglas wie Trinkgläser und Flaschen, Flach-glas und auch aus der Sicht der Hersteller der Glasschmelzanlagen, die Teile komplizierter Fabriken mit einer grossen Anzahl von Peripheriegeräten und Gebäuden sind und nicht gerade einfache Wannen wie eine Badewanne. Die ist um so bedeutender, als es sich bei Glasschmelzanlagen um langlebige Investitionsgüter handelt, die auch gewartet und ggf. repariert werden müssen.

Eine besonders knifflige Rolle spielen hierbei Behältergläser wie Trink-gläser, Flaschen und andere Geschirrteile, insbesondere aber das grossflächige Flach- oder Floatglas, weil es sich hier um Produkte handelt, in denen Fehler wie Eintrübungen durch Minipartikel, Gasblasen, Schlieren, Verfärbungen und Farbabweichungen durch Verbrennungsprodukte sowie Dickenunterschiede auf Dauer in der Durchsicht sichtbar bleiben. Bei Flachglas für die Herstellung von Solarelementen ergeben sich noch weitere Probleme: Da das Flachglas hierfür als Substrat dient und eine hohe Durchlässigkeit des Lichts -erforderlich ist, muss eine weitgehende Freiheit von absorbierenden Komponenten wie z. B. Eisenoxid gegeben sein. Mit der zumindest weitgehenden Beherrschung solcher Probleme befasst sich die vorliegende Erfindung.

Durch die US 3 884 665 A ist es bekannt, bei einem Schmelzofen für die Herstellung von Flachglas zwischen dem mit seitlichen Brennern bestückten Schmelzbereich und dem brennerfreien Läuterbereich in dem mit dem Brenngas gefüllten Raum über dem Beschickungsgut und der Schmelze eine erste Einschnürung vorzusehen, die Schmelze darunter aber nicht zu behindern. Zwischen dem Läuterbereich und dem Bereich für die Abkühlung der Schmelze zu einem Glasband ist eine weitere Einschnürung vorgesehen, die eine Bodenschwelle besitzt und deren Strömungsquerschnitt in senkrechter Richtung durch einen über der Bodenschwelle angeordneten Schieber einstellbar ist. Das Maximum der Temperatur der Glasschmelze dürfte dabei unterhalb der ersten Einschnürung des Gasraums liegen, denn die Beschreibung enthält den Hinweis, dass die Schmelze im Läuterbereich auf eine geeignete hohe Viskosität wieder abgekühlt wird. Die Bodenschwelle ist dabei keine Läuterbank, denn hierfür fehlt es an einer ausreichend grossen waagrechten Oberfläche in Strömungsrichtung für eine entsprechende Verweilzeit der Schmelze. Diese ist vielmehr wegen der zylindrischen Wölbung und des engen waagrechten Spalts zwischen der Unterkante des Schiebers besonders kurz.

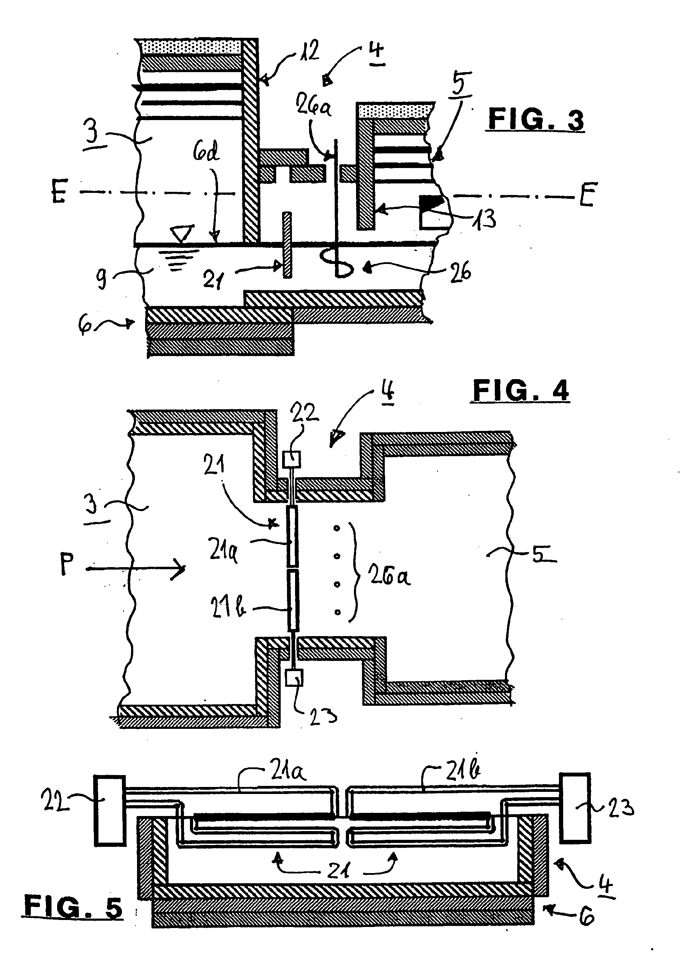

Durch die US 3 928 014 A ist es bei der Herstellung von Flachglas bekannt, innerhalb der Schmelze in einem quaderförmigen Wannenvolumen auf thermischem Wege zwei Strömungswalzen zu erzeugen. Dazu sind in der Ofendecke und quer zur Strömungsrichtung zwischen Beschickungs- und Entnahmeöffnung mehrere, z. B. acht, Brennergruppen angeordnet, die durch Änderung der Brenngaszufuhr gruppenweise auf unterschiedliche Leistungen eingestellt werden können. Der Bereich höchster Temperaturen erzeugt dabei eine starke Aufwärtsströmung und wird daher auch "spring zone" genannt. Diese Quellzone trennt nicht nur rein funktionell und auf hydraulischem Wege den Ofenraum in einen Schmelzbereich und einen Läuterbereich, sondern auch die Strömungsrichtungen an der Oberfläche und über dem Wannenboden. Die Oberflächenströmungen sind voneinander weg gerichtet, die Bodenströmungen aufeinander zu, wobei ein Teil der Bodenströmung der Strömungswalze im Läuterbereich wieder der Oberflächenströmung im Schmelzbereich in Richtung auf das Beschickungsgut beigemischt wird. Durch Verlagerung der Quellzone in Richtung auf die Flachglaswanne mittels Verlagerung der spezifischen Heizleistung der Brennergruppe gemäss Kurve B in Figur 3 wird eine Verlängerung des Strömungsweges vor der Quellzone erreicht. Dadurch sollen eine Verlängerung der Verweilzeit und damit eine Verbesserung der Glasqualität erreicht werden. Die Längenverhältnisse von Schmelzbereich zu Läuterbereich werden dabei bevorzugt zwischen 1,25:1 und 1,50:1 angegeben. Diese Massnahme geht jedoch zu Lasten der Länge des Läuterbereichs, so dass erheblich Probleme bestehen bleiben. Eine Läuterbank ist auch in diesem Dokument nicht offenbart.

Durch die US 5 766 296 A und die entsprechende EP 0 763 503 B1 ist es weiterhin bekannt, eine Trennung zwischen einem Schmelzbereich und einem Läuterbereich sowie den darin stattfindenden Strömungswalzen durch eine Bodenschwelle zu erzwingen und deren trennende Wirkung noch durch beiderseitige Reihen von Bodenelektroden und eine davor befindliche Reihe von Bubblerdüsen zu verstärken. Die Bodenschwelle hat jedoch nicht die Wirkung einer Läuterbank, denn ihre Höhe im Glasbad soll auf maximal 50 % des beiderseitigen Füllstandes beschränkt sein, und ihr Querschnitt soll sich nach oben hin stark verjüngen, so dass die Strömungswalzen so wenig wie möglich behindert werden. Zwischen dem Läuterbereich und einem Homogenisierungsbereich befindet sich unmittelbar hinter einer Stufe eine Einschnürung, die im englischen Sprachraum als "neck" oder "waist" bezeichnet wird, jedoch keine Einbauten innerhalb der Schmelze besitzt.

Durch die US-PS 5 194 081 ist es bekannt, einen Schmelzbereich für Glasrohstoffe und eine Aufstiegskammer für die Schmelze durch Bodenelektroden zu beheizen. Zwischen der Aufstiegskammer und dem Konditionierbereich ist eine Bodenerhebung angeordnet, die als Wehr bezeichnet wird und deren äußere Seitenwände der Luft ausgesetzt sind, um die Schmelze zu kühlen. Über den Abstand der Oberseite des Wehrs vom Schmelzenspiegel und die Länge in Strömungsrichtung des Glases ist nichts ausgesagt, so dass die Bodenerhebung nicht als Läuterbank und auch nicht zur Trennung von Glasströmungen dienen kann und auch nicht soll. Soweit eine Beheizung durch Brenner offenbart ist (Spalte 5, Zeilen 18 bis 27) sind diese in den Wandöffnungen (ports) 40 und 41 zugeordnet, also nach den üblichen Definitionen Querstrombrenner, deren Wirkung auf den dazwischen liegenden Querstrombereich beschränkt ist. Eine Längsströmung von Verbrennungsgasen durch die Konditionierungskammer ist auf diese Weise gleichfalls nicht möglich. Die Strömungen im Glas sind durch Pfeile angegeben, und es ist ersichtlich, dass oberhalb des Wehrs und innerhalb der Aufstiegskammer Gegenströmungen und Verwirbelungen auftreten, die eine Läuterung der Schmelze an dieser Stelle zumindest behindern. Vielmehr ist in dem gleichen Absatz in den Zeilen 18 bis 21 ausdrücklich gesagt, dass die Reduzierung von Verunreinigungen und Blasen nach (!) dem Überströmen des Wehrs 39 stattfinden soll. Dem aber steht die Badtiefe hinter dem Wehr 39 deutlich entgegen, so dass die Wertung des Wehrs 39 als Läuterbank nicht zu vertreten ist.

Aus der DE-C2-26 03 561 ist ein Glasschmelzbehälter der eingangs genannten Art bekannt, bei dem der Läuterbereich und ein daran anschließender schmalerer Zwischenteil (Einschnürung) gleich tief sind. Um im Läuterbereich eine zufriedenstellende Läuterung der Glasschmelze zu erzielen, muss außerdem am Übergang vom Zwischenteil zu einem sich daran anschließenden Konditionierkanal eine Stufe vorgesehen sein, damit der Boden im Konditionierkanal so hoch liegt, dass in ihm im Wesentlichen keine Rückströmung stattfinden kann. Ferner ist am Übergang vom Läuterbereich in den Zwischenteil eine flache querverlaufende wassergekühlte Stauwand angeordnet. Damit wird eine Regulierung der Geschwindigkeit der Vorwärtsströmung aus dem Läuterbereich heraus erreicht.

Der Erfindung liegt daher die Aufgabe zugrunde, eine Vorrichtung der eingangs beschriebenen Art dahingehend zu verbessern, dass die Glasschmelze vor der Abgabe an eine Verarbeitungseinrichtung so weit wie möglich von Fehlern wie Eintrübungen durch Minipartikel, Gasblasen, Schlieren, Verfärbungen und Farbabweichungen durch Verbrennungsprodukte sowie von Dickenunterschieden befreit wird, die auf Dauer in der Durchsicht sichtbar bleiben.

Diese Aufgabe wird mit den Merkmalen des Anspruchs 1 gelöst. Durch das Zusammenwirken der dort beschriebenen Mittel wird erreicht, dass die Glasschmelze vor der Abgabe an eine Weiterverarbeitungseinrichtung so weit wie möglich von Fehlern wie Eintrübungen durch Minipartikel, Gasblasen, Schlieren, Verfärbungen und Farbabweichungen durch Verbrennungsprodukte sowie von Dickenunterschieden befreit ist, die auf Dauer in der Durchsicht sichtbar bleiben. Durch die Läuterbank mit ihrer Sperrwirkung werden Rückströmungen in den Schmelzbereich mit starker Beheizung und die Verschleppung von störenden Effekten wie insbesondere von Partikeln in das Endprodukt verhindert und gleichzeitig der energetische Wirkungsgrad merklich verbessert und die Umwelt geschont.

Der Begriff "Läuterbank" wurde vor vielen Jahren von der Anmelderin eingeführt, da er erkennen lässt, welche Geometrie und Raumform und welche relative Lage innerhalb der Schmelze eine Läuterbank hat. In dem Lexikon "ABC Glas" vom Deutschen Verlag für Grundstoffindustrie Leipzig, 1991, sind auf den Seiten 165 und 166 die Begriffe "Läuterung" und "Läuterzone" erläutert. Gemäß Seite 165 geht es um eine Blasenentfernung durch Verkürzung des Weges des Blasenaufstiegs, indem man eine blasige Schmelze in breiter dünner Schicht bei hoher Temperatur langsam horizontal in Entnahmerichtung fliessen lässt, z.B. über einen in die Schmelze eingebauten Bodenwall. Zum Effekt der thermischen Läuterung gesellt sich hier die Verkürzung des Blasenaufstiegsweges. Dieses Prinzip gewährleistet einen starken Läutereffekt (wörtliches Zitat). Ähnliche Ausführungen finden sich unter dem Begriff "Läuterzone" auf Seite 166.

Es ist im Zuge weiterer Ausgestaltungen der Vorrichtung besonders vorteilhaft, wenn - entweder einzeln oder in Kombination -:
* die Kühlmittel höhenverstellbar in der Einschnürung angeordnet sind,
* die Kühlmittel aus Rohrabschnitten bestehen, deren Achsen mäanderförmig in einer gemeinsamen senkrechten Ebene angeordnet sind,
* in Strömungsrichtung hinter den Kühlmitteln Rührelemente angeordnet sind,
*
   a) zwischen der mindestens einen Beschickungsöffnung und den ersten Rauchgasabzügen Seitenbrenner für das Aufwärmen und Aufschmelzen der Glasrohstoffe angeordnet sind, und
   b) zwischen den ersten Rauchgasabzügen und den zweiten Rauchgasabzügen weitere Seitenbrenner für die Vollendung des Aufschmelzens angeordnet sind, und wenn ferner
   c) der Läuterbereich frei von Brennern gehalten ist,
* im Konditionierbereich Rauchgasabzüge und Brenner in einer solchen Reihenfolge angeordnet sind, dass die Rauchgase in Gegenrichtung zur Oberflächenströmung der Glasschmelze abströmen,
* die Bodenflächen durch eine Stufenbildung voneinander abgegrenzt sind, die in Richtung auf den überlauf ansteigend ausgebildet ist, insbesondere, wenn die jeweilige Stufenhöhe zwischen 5 und 30 cm beträgt,
* die Höhendifferenz der Bodenflächen vor und hinter der Läuterbank zwischen 10 und 30 cm beträgt,
* der Füllstand der Glasschmelze über der Läuterbank zwischen 0,2 und 0,5 m, vorzugsweise zwischen 0,3 und 0,4 m beträgt,
* die Länge der Läuterbank in Richtung der Summenströmung der Glasschmelze zwischen 0,8 und 3,0 m, vorzugsweise zwischen 1,0 und 2,5 m beträgt,
* die Breiten von Schmelzbereich und Läuterbereich zwischen 6,0 und 10,0 m betragen,
* das Verhältnis der Wannenlängen innerhalb von Schmelzbereich (2) und Läuterbereich vor und hinter der Läuterbank zwischen 2,4 und 3,0 beträgt,
* das Breitenverhältnis von Läuterbereich zu Einschnürung zwischen 0,4 und 0,6 beträgt,
* dem Schmelzbereich mindestens eine Vorwärmeinrichtung für die Vorwärmung von Oxidantien für die Verbrennung der Brennstoffe vorgeschaltet ist,
* die mindestens eine Vorrichtung zur Vorwärmung aus einem Regeneratorblock besteht und/oder, wenn
* die Schmelzeinrichtung als Querflammenofen ausgebildet ist, wenn beiderseits des Schmelzbereichs je ein Generatorblock angeordnet ist, der über Brennerports mit dem Raum über der Glasschmelze verbunden ist, und wenn unter den Brennerports und oberhalb des Spiegels der Glasschmelze Unterportbrenner angeordnet sind.

Die Erfindung betrifft auch ein Verfahren zur Erzeugung einer Glasschmelze mittels einer Schmelzvorrichtung der eingangs genannten Art.

Zur Lösung der gleichen Aufgabe und Erzielung der gleichen Vorteile ist ein solches Verfahren gekennzeichnet durch die Merkmale des Anspruchs 12.

Es ist im Zuge weiterer Ausgestaltungen des Verfahrens besonders vorteilhaft, wenn - entweder einzeln oder in Kombination -:
* die Strömungsgeschwindigkeit der Schmelze über der Läuterbank durch Kühlmittel eingestellt wird, die höhenverstellbar in der Einschnürung angeordnet sind,
* die Schmelze in Strömungsrichtung hinter den Kühlmitteln durch Rührelemente umgewälzt wird,
* das Temperaturprofil der Glasschmelze vom Schmelzbereich bis zum Überlauf so eingestellt wird, dass im Schmelzbereich, ausgehend von der Läuterbank, eine Oberflächenströmung des Gases in Richtung auf die Beschickungsöffnung und im Läuterbereich, in der Einschnürung und im Konditionierbereich eine Oberflächenströmung des Glases in Richtung auf den überlauf bewirkt wird, wobei oberhalb der Läuterbank ausschliesslich eine Strömung in Richtung auf den überlauf bewirkt wird,

* der Strömungsquerschnitt der Glasschmelze zwischen dem Schmelzbereich und dem Konditionierbereich verringert wird,
* die Verringerung des Strömungsquerschnitts stufenweise vorgenommen wird,
* die Oxidantien für die Verbrennung der Brennstoffe vorgewärmt werden,
* die Vorwärmung der Oxidantien in Regeneratorblöcken durchgeführt wird,
* die Schmelzeinrichtung im Querflammenverfahren betrieben wird und wenn die Oxidantien aus den Regeneratorblöcken durch Brennerports in den Schmelzbereich eingeführt werden, und/oder, wenn
* die Brennstoffe unterhalb der Brennerports befindlichen Brennern zugeführt werden und wenn die Flammen in den Gasraum oberhalb der Glasschmelze gerichtet werden.

Insbesondere Vorteilhaft sind die Verwendung von Verfahren und Vorrichtung für die Herstellung von Flachglas und von Tafeln für Solarelemente.

Zwei Ausführungsbeispiele des Erfindungsgegenstandes und deren Wirkungsweisen und weitere Vorteile werden nachfolgend anhand der Figuren 1 bis 7 näher erläutert.

Es zeigen:
- Figur 1: einen vertikalen Längsschnitt durch ein erstes Ausführungsbeispiel einer Schmelzeinrichtung,
- Figur 2: einen horizontalen Längsschnitt durch den Gegenstand von Figur 1 in Höhe der Brenner und der Rauchgasabzüge.
- Figur 3: einen Ausschnitt aus Figur 1 in vergrössertem Massstab,
- Figur 4: einen Horizontalschnitt durch den Gegenstand von Figur 3 entlang der Ebene E-E,
- Figur 5: eine horizontale Seitenansicht in Richtung des Pfeils P in Figur 4 in vergrössertem Massstab,
- Figur 6: einen vertikalen Längsschnitt durch ein zweites Ausführungsbeispiel einer Schmelzeinrichtung mit Brennerports und Unterportbrennern in kleinerem Massstab und
- Figur 7: einen horizontalen Längsschnitt durch den Gegenstand von Figur 6 in Höhe der Brennerports.

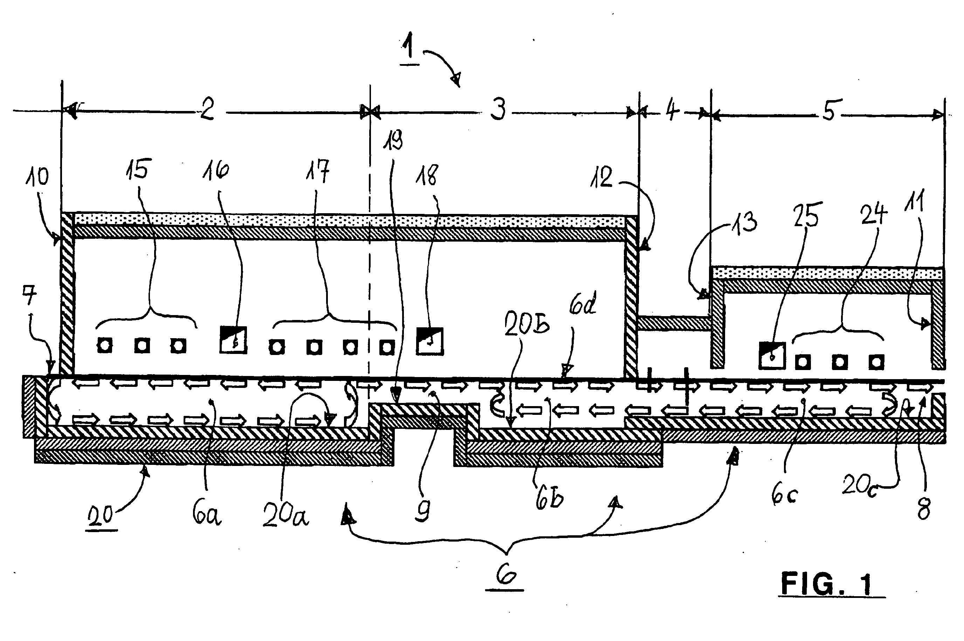

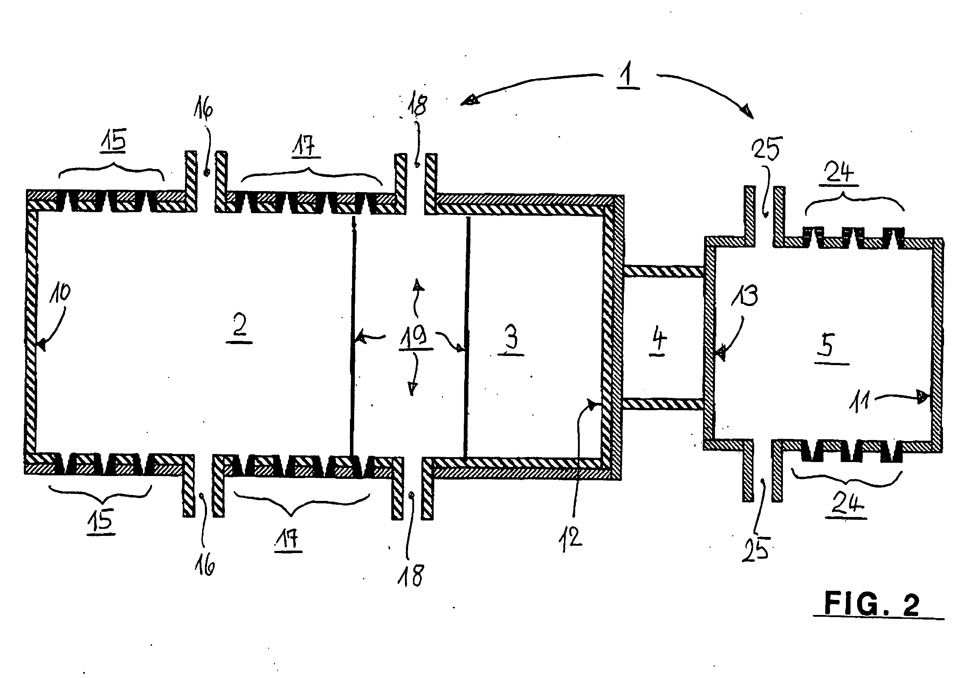

In den Figuren 1 und 2 ist eine Schmelzeinrichtung 1 gezeigt, die in Reihenschaltung einen Schmelzbereich 2, einen Läuterbereich 3, eine Einschnürung 4 und einen Konditionierbereich 5 besitzt. Das Wannenunterteil 6 wird durch entsprechende Wannenbereiche 6a, 6b und 6c gebildet, die von einer Beschickungsöffnung 7 für das feste Beschickungsgut bis zu einem Überlauf 8 führen und entsprechende Teilmengen einer Glasschmelze 9 enthalten. über der Beschickungsöffnung 7 befindet sich eine erste Stirnwand 10 und über dem überlauf 8 eine weitere Stirnwand 11. Die Einschnürung 4 befindet sich zwischen zwei weiteren Stirnwänden 12 und 13, deren waagrechte Unterkanten bis knapp über den Schmelzenspiegel 6d reichen, so dass eine ausreichende Trennung der Gasräume oberhalb der Glasschmelze 9 gegeben ist. Die weiteren Betrachtungen folgen in der Haupt-Strömungsrichtung der Glasschmelze.

Im Schmelzbereich 2 befindet sich in beiden Wandbereichen je eine erste Gruppe von Seitenbrennern 15, denen in beiden Wandbereichen je ein Rauchgasabzug 16 folgt. An dieser Stelle liegt der grösste Wärmebedarf, da hier das Beschickungsgut vorgewärmt und zumindest grösstenteils aufgeschmolzen wird. Der ersten Gruppe folgt je eine zweite Gruppe von Seitenbrennern 17, denen wiederum je ein Rauchgasabzug 18 folgt.

Der nachfolgende Läuterbereich 3 ist frei von Brennern und Abzügen und besitzt an seinem Anfang die hier ganz entscheidende Läuterbank 19, die sich über die gesamte innere Breite des Wannenbereichs 6b erstreckt. Der Wannenboden 20 ist zwischen Bodenflächen 20a, 20b und 20c abgestuft ausgebildet, und zwar beträgt der Füllstand vor der Läuterbank 19 1,45 m und im Konditionierbereich 5 noch 1,15 m, wobei betont wird, dass es sich hierbei um beispielhafte Werte handelt. Der Füllstand über der Läuterbank 19 wird zweckmässig zwischen 0,3 und 0,4 m gewählt, das sind etwa 20 bis 30 %, woraus ersichtlich wird, dass die Läuterbank 19 eine beträchtliche Höhe hat. Die Länge der Läuterbank 19 in Richtung der Summenströmung beträgt zwischen 1,0 und 2,1 m, so dass eine ausreichende Verweilzeit der Schmelze allein auf der Läuterbank 19 gegeben ist. Entscheidend ist hierbei, dass das quaderförmige Volumen der Schmelze über der Läuterbank 19 eine geringe Höhe, aber in Strömungsrichtung eine grosse Länge hat, um - auch durch die Verweilzeit der Schmelze - eine gründliche Läuterung zu ermöglichen.

Gemäss den Figuren 3 bis 5 befindet sich In der Einschnürung 4 eine Kühleinrichtung 21, die höhenverstellbar an zwei Vertikalantrieben 22 und 23 befestigt ist und aus zwei mäanderförmigen Rohrabschnitten 21a und 21 b besteht, was aus Figur 5 entnehmbar ist. Die Rohrachsen liegen in vertikalen Ebenen, und auch die Vertikalantriebe 22 und 23 sind wassergekühlt. Gemäss den Figuren 3 und 4 ist in der Einschnürung 4 noch eine Reihe von Rührelementen 26 angeordnet, die an senkrechten Antriebswellen 26a befestigt sind.

Im Konditionierbereich 5 ist auf beiden Seiten je eine Gruppe von Brennern 24 und jeweils ein Rauchgasabzug 25 angeordnet (siehe hierzu auch die Figur 1). Ein weiterer wesentlicher Punkt für das Betriebsverfahren liegt darin, dass über der Läuterbank 19 die höchste Temperatur der Glasschmelze erreicht wird.

Die vorteilhafte Wirkung der Läuterbank 19 wird anhand der Strömungspfeile in Figur 1 erläutert: Durch die Bildung zweier Strömungswalzen beiderseits der Läuterbank 19 entstehen stabile Strömungsverhältnisse und kontrollierte Bedingungen für die Läuterung. Durch eine deutlich geringere Rückströmung von kühlerem Glas aus dem Konditionierbereich 5 in den Läuterbereich 3 sinken die Verluste, denn dieser Glasstrom müsste im Schmelz- oder Läuterbereich wieder aufgeheizt werden, was dem Prozess erhebliche Energiemengen entziehen würde. über die Läuterbank 19 fliesst das Glas, wie gezeigt, nur in einer Richtung. Die Menge pro Zeiteinheit entspricht im Mittel der Menge von zugeführtem Beschickungsgut und durch den überlauf abgeführter Glasmenge.

Die zweite Strömungswalze (rechts von der Läuterbank 19) sorgt dafür, dass das Glas, welches die erste Strömungswalze (links von der Läuterbank 19) verlässt, an die Oberfläche befördert wird. Eine Abgabe von noch störenden Blasen ist so gegeben. Die zweite Strömungswalze arbeitet als eine Art Strömungsbarriere gegen die erste Strömungswalze. Die Kühlleistung im Konditionierbereich 5 liegt über der Energiemenge, die allein nur dem Glas entzogen werden muss, das die Schmelzeinrichtung 1 über den überlauf 8 verlässt. Diese zweite Strömungswalze wird in ihrer Ausprägung von Prozessparametern wie Durchsatz, aber auch von der Eintauchtiefe der Kühleinrichtung 21 beeinflusst, die im Bereich der Einschnürung 4 eingetaucht wird. Die zweite Strömungswalze ist dadurch deutlich schwächer ausgeprägt. Im Gegensatz zu den bekannten Barrieren im Bodenbereich und mit geringer Höhe bewirkt die Läuterbank 19 eine wirkliche Trennung der beiden Strömungswalzen. Daher werden der Schmelze über die zweite Strömungswalze dem heissen Bereich in der Schmelzwanne gegenüber dem Stande Technik deutlich geringere Energiemengen entzogen.

Zur Bedeutung der Kühleinrichtung 21 wird noch folgendes ausgeführt: Deren Rohrabschnitte 21a und 21b behindern je nach Eintauschtiefe den direkten Fluss der Glasschmelze 9 in den Konditionierbereich 5. Im Nahbereich der Rohrabschnitte 21a und 21b wird das Glas stark abgekühlt, so dass dieses Glas nicht oder nur sehr wenig an der Strömung teilnimmt.

Die Vertikalverstellung der Rohrabschnitte 21a und 21 b ist eine der wesentlichen Beeinflussungsmöglichkeiten, um die Menge an zurückfliessendem Glas zu beeinflussen. Bei niedriger Eintauchtiefe strömte eine grössere Glasmenge in den Konditionierbereich 5 als bei einer grösseren Eintauchtiefe. Ausgehend von einer konstanten Entnahmemenge pro Zeiteinheit aus der Anlage wird daher die Menge an rezirkulierendem Glas im ersten Fall vergrössert und im zweiten Fall verringert. Die Menge an Glas, welche in den Schmelzbereich zurückfliesst, bestimmt nun wesentlich die Position und die Stabilität der Strömungszone, bei der sich die rezirkulierende Glasmenge mit dem Glas trifft, das von der Beschickungsöffnung 7 ausgehend vorwärts strömt.

Beim Stand der Technik wird einerseits ein stabiler Strömungszustand dadurch erreicht, dass man eine möglichst grosse Glasmenge rezirkulieren lässt, andererseits wird damit aber auch die Vorwärtsströmung im Bereich vom Umkehrpunkt zur Einschnürung 4 hin beschleunigt. Dieser Bereich, den das Glas durchströmt, ist allerdings kritisch für die erreichbare Qualität des Glases. Eine kurze Verweilzeit in diesem Bereich ist gleichbedeutend mit schlechterer Auflösung von Schmelzrelikten und der Entgasung der Schmelze. Damit wird deutlich, dass die Einstellung und Sicherung der Qualität erheblich von dem Geschick und der Erfahrung des Bedienungspersonals abhängt, wie man solche Elemente in der Einschnürung 4 positioniert.

Mit der Läuterbank 19 gemäss der vorliegenden Erfindung wird genau der vorteilhafte Effekt gegenüber dem Stand der Technik erreicht und die Unsicherheit ausgeschaltet. Die Strömungen in der Anlage werden durch den Einbau der Läuterbank 19 deutlich stabilisiert. Modellrechnungen und Versuche haben gezeigt, dass die Position der Kühleinrichtung dann nur noch einen sehr geringen Einfluss auf die gesamten Strömungsbedingungen hat.

Die Läuterbank 19 in einer solchen Anlage bringt also in zweierlei Hinsicht deutliche Vorteile: Das Glas wird durch die Läuterbank 19 an die Oberfläche gezwungen. Ein Austreiben von verbliebenen Gasblasen ist damit beherrscht. Die Länge und Glasüberdeckung der Läuterbank 19 ist so auszulegen, dass auch eine Mindestgrösse von Gasblasen auf der Läuterbank 19 bis an die Oberfläche aufsteigen kann.

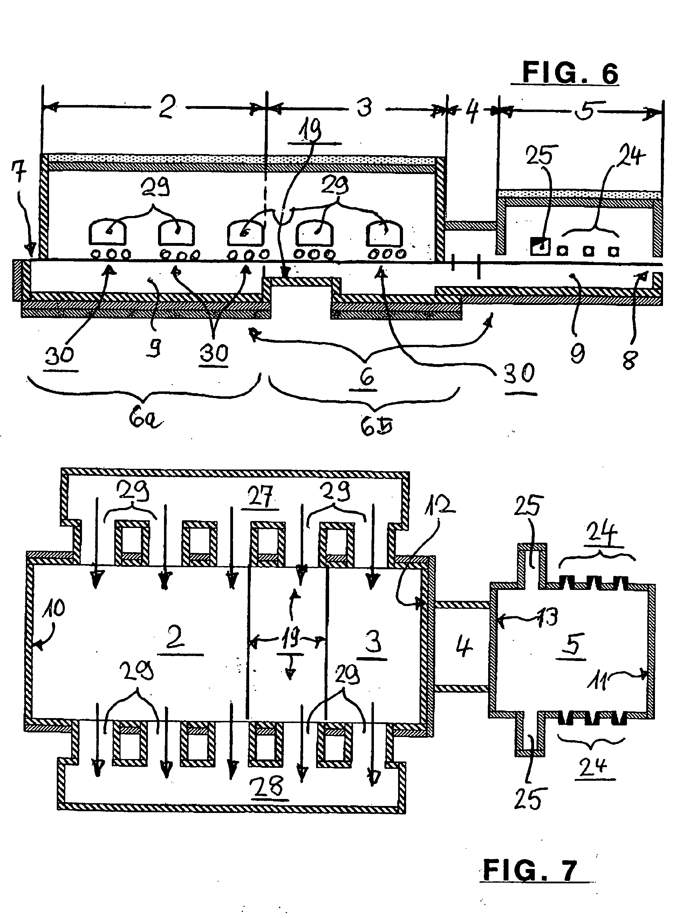

Die Figur 6 zeigt einen vertikalen Längsschnitt durch das zweite Ausführungsbeispiel einer Schmelzeinrichtung mit Regeneratorblöcken 27 und 28 auf beiden Seiten des Wannenunterteils 6 sowie Brennerports 29 und sogenannten Unterportbrennern 30 in kleinerem Massstab. Die Unterschiede beziehen sich auf die Zuordnung der Brennerports 29 und der Unterportbrenner 30 zu dem Schmelzbereich 2 und dem Läuterbereich 3, für die die bisherigen Bezugszeichen beibehalten werden.

Aus Figur 7, die einen horizontalen Längsschnitt durch den Gegenstand von Figur 6 in Höhe der Brennerports 29 zeigt geht zusätzlich folgendes hervor: Es handelt sich um eine sogenannten Querflammenwanne, die alternierend im Umschaltbetrieb gefahren wird. In der einen Phase strömt die vorgewärmte Verbrennungsluft vom Generatorblock 27 in Richtung der oberen Pfeilreihe in die Wannenbereiche 6a und 6b, wobei gleichzeitig durch die Unterportbrenner 30 Brennstoffe und Oxidantien, ggf. auch im Gemisch, und/oder mit Sauerstoff angereicherte Luft zur Verbrennung zugeführt werden, was spezielle Brennerkonstruktionen bedingt, die aber dem Fachmann bekannt sind. Gleichzeitig strömen die Verbrennungs- bzw. Abgase in Richtung der unteren Pfeilreihe in den Generatorblock 28 ab. Die Strömungsrichtungen werden mit einer bestimmten Frequenz umgekehrt, mit der auch die Unterportbrenner 30 auf beiden Seiten nur alternierend eingeschaltet werden. Auch diese Betriebsweise ist dem Fachmann bekannt, weswegen hierzu keine weiteren Ausführungen gemacht werden müssen.

Erfindungsgemäss spielt jedoch auch hierbei die Anwesenheit der bereits beschriebenen Läuterbank 19 zwischen dem Schmelzbereich 2 und am Anfang des Läuterbereichs 3 eine wesentliche Rolle, und zwar auch hier im Zusammenwirken mit dem inneren Aufbau und der Funktion der Einschnürung 4, wie sie bereits beschrieben wurde und in den Figuren 3 bis 5 dargestellt ist. Die Figuren 6 und 7 sind also auch in der Zusammenschau mit den Figuren 3 bis 5 zu werten. Auch im Falle der Figuren 6 und 7 ist die Anzahl der Brennerports 29 vor der Läuterbank 19 grösser als hinter der Läuterbank 19.

### Bezugszeichenliste:

- 1: Schmelzeinrichtung
- 2: Schmeizbereich.
- 3: Läuterbereich
- 4: Einschnürung
- 5: Konditionierbereich
- 6: Wannenunterteil
- 6a: Wannenbereich
- 6b: Wannenbereich
- 6c: Wannenbereich
- 6d: Schmelzenspiegel
- 7: Beschickungsöffnung
- 8: überlauf
- 9: Glasschmelze
- 10: Stirnwand
- 11: Stirnwand
- 12: Stirnwand
- 13: Stirnwand
- 15: Seitenbrenner
- 16: Rauchgasabzug
- 17: Seitenbrenner
- 18: Rauchgasabzug
- 19: Läuterbank
- 20: Wannenboden
- 20a: Bodenfläche,
- 20b: Bodenfläche
- 20c: Bodenfläche
- 21: Kühleinrichtung
- 21a: Rohrabschnitt
- 21b: Rohrabschnitt
- 22: Vertikalantrieb
- 23: Vertikalantrieb
- 24: Brenner
- 25: Rauchgasabzug
- 26: Rührelemerite
- 26a: Antriebswellen
- 27: Regeneratorblock
- 28: Regeneratorbtock
- 29: Brennerports
- 30: Unterportbrenner

## Patentansprüche

1. Schmelzeinrichtung (1) für die Erzeugung einer Glasschmelze (9) mit einer Reihenanordnung aus mindestens einer Beschickungsöffnung (7) für Glasrohstoffe, einem Schmelzbereich (2), einem Läuterbereich (3), einer Einschnürung (4), einem Konditionierbereich (5) und einem Überlauf (8) für die Überleitung der Glasschmelze (9) zu einer Verarbeitungseinrichtung, wobei zwischen der mindestens einen Beschickungsöffnung (7) und dem Läuterbereich (3) in jeder Seitenwand Seitenbrenner (15, 17, 30) und Abzugsöffnungen (16, 18, 29) für Rauchgase angeordnet sind und innerhalb der Einschnürung (4) Kühlmittel (21, 22, 23) für die Glasschmelze (9) angeordnet sind, und wobei die Reihenanordnung jeweils Bodenflächen (20a, 20b, 20c), Seitenwände und Deckenflächen aufweist, **dadurch gekennzeichnet,**
**dass** zwischen dem Schmelzbereich (2) und am Anfang des Läuterbereichs (3) eine Läuterbank (19) angeordnet ist, deren Oberseite einen solchen Abstand von einem konstruktiv vorgegebenen Füllstand der Glasschmelze (9) hat, dass eine Rückströmung der Glasschmelze (9) vom Läuterbereich (3) zum Schmelzbereich (2) kleinstmöglich ist, und
**dass** die Einschnürung (4) an beiden Enden von Stirnwänden (12, 13) begrenzt ist, die oberhalb der Glasschmelze (9) enge Strömungsquerschnitte für Rauchgase freilassen.

2. Schmelzeinrichtung nach Anspruch 1, **dadurch gekennzeichnet, dass** die Kühlmittel (21, 22, 23) höhenverstellbar in der Einschnürung (4) angeordnet sind und aus Rohrabschnitten (21a, 21b) bestehen, deren Achsen mäanderförmig in einer gemeinsamen senkrechten Ebene angeordnet sind.

3. Schmelzeinrichtung nach Anspruch 1, **dadurch gekennzeichnet, dass**
a) zwischen der mindestens einen Beschickungsöffnung (7) und den ersten Rauchgasabzügen (16) Seitenbrenner (15) für das Aufwärmen und Aufschmelzen der Glasrohstoffe angeordnet sind,
b) zwischen den ersten Rauchgasabzügen (16) und den zweiten Rauchgasabzügen (18) weitere Seitenbrenner (17) für die Vollendung des Aufschmelzens angeordnet sind, und dass
c) der Läuterbereich (3) frei von Brennern gehalten ist.

4. Schmelzeinrichtung nach Anspruch 1, **dadurch gekennzeichnet, dass** die Bodenflächen (20a, 20b, 20c) durch eine Stufenbildung voneinander abgegrenzt sind, die in Richtung auf den Überlauf (8) ansteigend ausgebildet ist, wobei die jeweilige Stufenhöhe zwischen 5 und 30 cm beträgt.

5. Schmelzeinrichtung nach Anspruch 1, **dadurch gekennzeichnet, dass** die Höhendifferenz der Bodenflächen (20a, 20b) vor und hinter der Läuterbank (19) zwischen 10 und 30 cm beträgt.

6. Schmelzeinrichtung nach Anspruch 1, **dadurch gekennzeichnet, dass** der Füllstand der Glasschmelze (9) über der Läuterbank (19) zwischen 0,2 und 0,5 m, vorzugsweise zwischen 0,3 und 0,4 m beträgt.

7. Schmelzeinrichtung nach Anspruch 1, **dadurch gekennzeichnet, dass** die Länge der Läuterbank (19) in Richtung der Summenströmung der Glasschmelze (9) zwischen 0,8 und 3,0 m, vorzugsweise zwischen 1,0 und 2,5 m beträgt.

8. Schmelzeinrichtung nach Anspruch 1, **dadurch gekennzeichnet, dass** die Breiten von Schmelzbereich (2) und Läuterbereich (3) zwischen 6,0 und 10,0 m betragen.

9. Schmelzeinrichtung nach Anspruch 1, **dadurch gekennzeichnet, dass** das Verhältnis der Wannenlängen innerhalb von Schmelzbereich (2) und Läuterbereich (3) vor und hinter der Läuterbank (19) zwischen 2,4 und 3,0 beträgt.

10. Schmelzeinrichtung nach Anspruch 1, **dadurch gekennzeichnet, dass** dem Schmelzbereich (2) mindestens eine Vorwärmeinrichtung für die Vorwärmung von Oxidantien für die Verbrennung der Brennstoffe vorgeschaltet ist, die aus einem Regeneratorblock (27, 28) besteht.

11. Schmelzeinrichtung nach Anspruch 1, **dadurch gekennzeichnet, dass** die Schmelzeinrichtung (1) als Querflammenofen ausgebildet ist, dass beiderseits des Schmelzbereichs (2) je ein Regeneratorblock (27, 28) angeordnet ist, der über Brennerports (29) mit dem Raum über der Glasschmelze (9) verbunden ist, und dass unter den Brennerports (29) und oberhalb des Spiegels der Glasschmelze (9) Unterportbrenner (30) angeordnet sind.

12. Verfahren zur Erzeugung einer Glasschmelze (9) mittels einer Schmelzvorrichtung (1) mit einer Beschickungsöffnung (7) für Glasrohstoffe, wobei die Glasschmelze (9) durch eine Reihenanordnung aus einem Schmelzbereich (2), einem Läuterbereich (3), einer Einschnürung (4), einem Konditionierbereich (5) und aus einem Überlauf (8) zu einer Endverarbeitung gefördert wird, wobei die Glasschmelze zwischen der Beschickungsöffnung (7) und dem Läuterbereich (3) durch Seitenbrenner (15, 17, 30) und zugehörige Abzugsöffnungen (16, 18, 29) für Rauchgase beheizt und in der Einschnürung (4) durch Kühlmittel (21, 22, 23) gekühlt wird, **dadurch gekennzeichnet,**
**dass** die Glasschmelze (9) zwischen dem Schmelzbereich (2) und dem Läuterbereich (3) über eine Läuterbank (19) geführt wird, deren Oberseite einen solchen Abstand vom Füllstand der Glasschmelze (9) hat, dass eine Rückströmung der Glasschmelze (9) vom Läuterbereich (3) zum Schmelzbereich (2) kleinstmöglich ist,
**dass** die Glasschmelze im Konditionierbereich (5) durch Brenner (24) und Rauchgasabzüge (25) beheizt wird, die in einer solchen Reihenfolge angeordnet sind, dass die Rauchgase in Gegenrichtung zur Oberflächenströmung der Glasschmelze (9) abströmen, und
**dass** die Leistungsdosierung auf dem Strömungsweg der Glasschmelze (9) so eingestellt wird, dass die maximale Temperatur der Glasschmelze (9) über der Läuterbank (19) durchlaufen wird.

13. Verfahren nach Anspruch 12, **dadurch gekennzeichnet, dass** das Temperaturprofil der Glasschmelze (9) vom Schmelzbereich (2) bis zum Überlauf (8) so eingestellt wird, dass im Schmelzbereich (2), ausgehend von der Läuterbank (19), eine Oberflächenströmung in Richtung auf die Beschickungsöffnung (7) und im Läuterbereich (3), in der Einschnürung (4) und im Konditionierbereich (5) eine Oberflächenströmung in Richtung auf den Überlauf (8) bewirkt wird, wobei oberhalb der Läuterbank (19) ausschließlich eine Strömung in Richtung auf den Überlauf (8) bewirkt wird.

14. Verfahren nach Anspruch 12, **dadurch gekennzeichnet, dass** der Strömungsquerschnitt der Glasschmelze (9) zwischen dem Schmelzbereich (2) und dem Konditionierbereich (5) verringert wird, wobei die Verringerung des Strömungsquerschnitts stufenweise erfolgt.

## Claims

1. A melting device (1) for producing a glass melt (9) with an in-line arrangement of at least one charging door (7) for glass raw materials, a melting region (2), a fining region (3), a constriction (4), a conditioning region (5) and an overflow (8) for the transfer of the glass melt (9) to a processing device, wherein lateral burners (15, 17, 30) and vents (16, 18, 29) for flue gases are arranged in each side wall between the at least one charging door (7) and the fining region (3) and cooling means (21, 22, 23) for the glass melt (9) are arranged within the constriction (4), and wherein the in-line arrangement respectively features bottom surfaces (20a, 20b, 20c), side walls and ceiling surfaces, **characterized in**
**that** a fining bank (19) is arranged between the melting region (2) and the beginning of the fining region (3), wherein the upper side of said fining bank is spaced apart from a constructively predefined filling level of the glass melt (9) by such a distance that the backflow of the glass melt (9) from the fining region (3) to the melting region (2) is minimal, and in
**that** the constriction (4) is on both ends delimited by end walls (12, 13) that leave open narrow flow cross sections for flue gases above the glass melt (9).

2. The melting device according to claim 1, **characterized in that** the cooling means (21, 22, 23) are arranged in the constriction (4) such that their height can be adjusted and consist of pipe sections (21a, 21b), the axes of which are arranged in a common vertical plane in a meander-shaped fashion.

3. The melting device according to claim 1, **characterized in that**
a) lateral burners (15) for heating and melting the glass raw materials are arranged between the at least one charging door (7) and the first flue gas vents (16),
b) additional lateral burners (17) for completing the melting process are arranged between the first flue gas vents (16) and the second flue gas vents (18), and
c) the fining region (3) is not provided with any burners.

4. The melting device according to claim 1, **characterized in that** the bottom surfaces (20a, 20b, 20c) are separated from one another by steps that ascend in the direction of the overflow (8), wherein the respective step height lies between 5 and 30 cm

5. The melting device according to claim 1, **characterized in that** the height difference between the bottom surfaces (20a, 20b) situated upstream and downstream of the fining bank (19) lies between 10 and 30 cm.

6. The melting device according to claim 1, **characterized in that** the filling level of the glass melt (9) above the fining bank (19) lies between 0.2 and 0.5 m, preferably between 0.3 and 0.4 m.

7. The melting device according to claim 1, **characterized in that** the length of the fining bank (19) in the direction of the cumulative flow of the glass melt (9) lies between 0.8 and 3.0 m, preferably between 1.0 and 2.5 m.

8. The melting device according to claim 1, **characterized in that** the widths of the melting region (2) and the fining region (3) lie between 6.0 and 10.0 m.

9. The melting device according to claim 1, **characterized in that** the ratio between the trough lengths within the melting region (2) and the fining region (3) upstream and downstream of the fining bank (19) lies between 2.4 and 3.0.

10. The melting device according to claim 1, **characterized in that** at least one preheating device for preheating oxidants for the combustion of the fuels is arranged upstream of the melting region (2) and consists of a regenerator block (27, 28).

11. The melting device according to claim 1, **characterized in that** the melting device (1) is realized in the form of a cross-fired furnace, **in that** one regenerator block (27, 28) is respectively arranged to both sides of the melting region (2) and connected to the space above the glass melt (9) by means of burner ports (29), and **in that** underport burners (30) are arranged underneath the burner ports (29) and above the level of the glass melt (9).

12. A method for producing a glass melt (9) by means of a melting device (1) with the charging door (7) for glass raw materials, wherein the glass melt (9) is conveyed to a processing device through an in-line arrangement of a melting region (2), a fining region (3), a constriction (4), a conditioning region (5) and an overflow (8), and wherein the glass melt is heated between the charging door (7) and the fining region (3) by means of lateral burners (15, 17, 30) and associated vents (16, 18, 29) for flue gases, as well as cooled in the constriction (4) with the aid of cooling means (21, 22, 23), **characterized in**
**that** the glass melt (9) is conveyed over a fining bank (19) between the melting region (2) and the fining region (3), wherein the upper side of said fining bank is spaced apart from the filling level of the glass melt (9) by such a distance that the backflow of the glass melt (9) from the fining region (3) to the melting region (2) is minimal, in
**that** the glass melt is heated in the conditioning region (5) by means of burners (24) and flue gas vents (25) that are arranged in such a sequence that the discharge of flue gases is directed opposite to the surface flow of the glass melt (9), and in
**that** the heating power along the flow path of the glass melt (9) is adjusted in such a way that the maximum temperature of the glass melt (9) occurs above the fining bank (19).

13. The method according to claim 12, **characterized in that** the temperature profile of the glass melt (9) from the melting region (2) to the overflow (8) is adjusted in such a way that a surface flow in the direction of the charging door (7) is effected in the melting region (2) starting from the fining bank (19) and a surface flow in the direction of the overflow (8) is effected in the fining region (3), in the constriction (4) and in the conditioning region (5), wherein only a flow in the direction of the overflow (8) is effected above the fining bank (19).

14. The method according to claim 12, **characterized in that** the flow cross section of the glass melt (9) between the melting region (2) and the conditioning region (5) is reduced, wherein the reduction of the flow cross section is realized stepwise.

## Revendications

1. Dispositif de coulée (1) pour la production d'une coulée de verre (9), comportant un dispositif en série composé d'au moins une ouverture de chargement (7) pour les matières premières du verre, d'une zone de coulée (2), d'une zone d'affinage (3), d'un étranglement (4), d'une zone de conditionnement (5) et d'un trop-plein (8) pour le transfert de la coulée de verre (9) vers un dispositif de transformation, des brûleurs latéraux (15, 17, 30) et ouvertures d'extraction (16, 18, 29) pour les gaz de fumée étant disposés dans chaque paroi latérale entre l'au moins une ouverture de chargement (7) et la zone d'affinage (3) et des moyens de refroidissement (21, 22, 23) pour la coulée de verre (9) étant disposés dans l'étranglement (4) et le dispositif en série présentant respectivement des surfaces de fond (20a, 20b, 20c), des parois latérales et des surfaces de plafond, **caractérisé en ce**
**que** entre la zone de coulée (2) et au début de la zone d'affinage (3) est disposé un banc d'affinage (19) dont la face supérieure est à une distance d'un niveau de remplissage prédéfini au niveau de la conception de la coulée de verre (9) telle qu'un reflux de la coulée de verre (9) de la zone d'affinage (3) vers la zone de coulée (2) soit très peu probable et
**que** l'étranglement (4) est limité aux deux extrémités par des parois frontales (12, 13) qui libèrent d'étroites sections transversales d'écoulement pour les gaz de fumée au-dessus de la coulée de verre (9).

2. Dispositif de coulée selon la revendication 1, **caractérisé en ce que** les moyens de refroidissement (21, 22, 23) sont disposés de manière à être réglables en hauteur dans l'étranglement (4) et sont constitués de sections tubulaires (21a, 21b) dont les axes sont disposés en forme sinusoïdale dans un plan vertical commun.

3. Dispositif de coulée selon la revendication 1, **caractérisé en ce que**,
a) entre l'au moins une ouverture de chargement (7) et les premiers extracteurs de gaz de fumée (16), des brûleurs latéraux (15) destinés à chauffer et à faire fondre les matières premières du verre sont disposés,
b) entre les premiers extracteurs de gaz de fumée (16) et les seconds extracteurs de gaz de fumée (18), d'autres brûleurs latéraux (17) permettant de terminer la coulée sont disposés et que
c) la zone d'affinage (3) est gardée exempte de brûleurs.

4. Dispositif de coulée selon la revendication 1, **caractérisé en ce que** les surfaces de fond (20a, 20b, 20c) sont limitées entre elles par une formation d'étages qui sont réalisés en montant vers le trop-plein (8), la hauteur respective des étages étant de 5 à 30 cm.

5. Dispositif de coulée selon la revendication 1, **caractérisé en ce que** la différence de hauteur entre les surfaces de fond (20a, 20b) devant et derrière le banc d'affinage (19) est de 10 à 30 cm.

6. Dispositif de coulée selon la revendication 1, **caractérisé en ce que** le niveau de remplissage de la coulée de verre (9) au-dessus du banc d'affinage (19) est de 0,2 à 0,5 m, de préférence de 0,3 à 0,4 m.

7. Dispositif de coulée selon la revendication 1, **caractérisé en ce que** la longueur du banc d'affinage (19) en direction de l'écoulement global de la coulée de verre (9) est de 0,8 à 3,0 m, de préférence de 1,0 à 2,5 m.

8. Dispositif de coulée selon la revendication 1, **caractérisé en ce que** les largeurs de la zone de coulée (2) et de la zone d'affinage (3) sont de 6,0 à 10,0 m.

9. Dispositif de coulée selon la revendication 1, **caractérisé en ce que** le rapport entre la longueur des bacs dans la zone de coulée (2) et la zone d'affinage (3) devant et derrière le banc d'affinage (19) est de 2,4 à 3,0.

10. Dispositif de coulée selon la revendication 1, **caractérisé en ce qu'**est installé en amont de la zone de coulée (2) au moins un dispositif de préchauffage pour le préchauffage d'oxydants pour le brûlage des combustibles et qui est composé d'un bloc régénérateur (27, 28).

11. Dispositif de coulée selon la revendication 1, **caractérisé en ce que** le dispositif de coulée (1) se présente sous forme d'un four à brûleurs transversaux, qu'un bloc régénérateur (27, 28) est disposé de chacun des deux côtés de la zone de coulée (2), ce bloc étant relié par des ports de brûleurs (29) à l'espace situé au-dessus de la coulée de verre (9) et que des sous-ports de brûleurs (30) sont disposés en-dessous des ports de brûleurs (29) et au-dessus du niveau de la coulée de verre (9).

12. Procédé de production d'une coulée de verre (9) au moyen d'un dispositif de coulée (1) comportant une ouverture de chargement (7) pour les matières premières du verre, la coulée de verre (9) étant transportée par un dispositif en série constitué d'une zone de coulée (2), d'une zone d'affinage (3), d'un étranglement (4), d'une zone de conditionnement (5) et d'un trop-plein (8) vers une transformation finale, la coulée de verre étant chauffée entre l'ouverture de chargement (7) et la zone d'affinage (3) par des brûleurs latéraux (15, 17, 30) et des ouvertures d'extraction correspondantes (16, 18, 29) pour les gaz de fumée et refroidie dans l'étranglement (4) par des moyens de refroidissement (21, 22, 23), **caractérisé en ce**
**que** la coulée de verre (9) est guidée entre la zone de coulée (2) et la zone d'affinage (3) via un banc d'affinage (19) dont la face supérieure est à une distance du niveau de remplissage de la coulée de verre (9) telle qu'un reflux de la coulée de verre (9) de la zone d'affinage (3) vers la zone de coulée (2) soit très peu probable,
**que** la coulée de verre est chauffée dans la zone de conditionnement (5) par des brûleurs (24) et des extracteurs de gaz de fumée (25) qui sont disposés dans un ordre tel que les gaz de fumée s'écoulent dans le sens inverse à l'écoulement surfacique de la coulée de verre (9) et
**que** le dosage d'intervention sur la voie d'écoulement de la coulée de verre (9) est réglé de manière à ce que la température maximale de passage de la coulée de verre (9) se situe au-dessus du banc d'affinage (19).

13. Procédé selon la revendication 12, **caractérisé en ce que** le profil de température de la coulée de verre (9) de la zone de coulée (2) jusqu'au trop-plein (8) est réglé de manière à provoquer, dans la zone de coulée (2), en partant du banc d'affinage (19), un écoulement surfacique en direction de l'ouverture de chargement (7) et dans la zone d'affinage (3), dans l'étranglement (4) et dans la zone de conditionnement (5), un écoulement surfacique en direction du trop-plein (8), exclusivement un écoulement en direction du trop-plein (8) étant provoqué au-dessus du banc d'affinage (19).

14. Procédé selon la revendication 12, **caractérisé en ce que** la section transversale d'écoulement de la coulée de verre (9) est réduite entre la zone de coulée (2) et la zone de conditionnement (5), la réduction de la section transversale d'écoulement se faisant graduellement.
